# EUROPÄISCHE PATENTANMELDUNG

(11) **EP 2 767 255 A1**
(43) Veröffentlichungstag der Anmeldung: **20.08.2014**
(21) Anmeldenummer: 14154074.0
(22) Anmeldetag: 06.02.2014
(51) Int. Cl.: A61C 13/20, F27B 17/02

(54) **Dentalbrennofen sowie Verfahren zum Betrieb eines Dentalbrennofens**

(30) Priorität: 19.02.2013 DE 102013101633
(71) Anmelder: Ivoclar Vivadent AG, 9494 Schaan (LI)
(72) Erfinder: Kettner, Philipp, 6830 Rankweil (AT); Grünenfelder, Robert, 9492 Eschen (LI); Wachter, Wolfgang, 9494 Schaan (LI)
(74) Vertreter: Baronetzky, Klaus

(57) **Zusammenfassung**

Es ist ein Dentalbrennofen, mit einer Anzeigevorrichtung und einer Bedienvorrichtung (10) für den Dentalbrennofen vorgesehen, wobei die Bedienvorrichtung insbesondere in die Anzeigevorrichtung unter Ausbildung eines berührungsempfindlichen Bildschirms (12) integriert ist, und wobei die Bedienvorrichtung (10) ermöglicht die Auswahl von Programmen für das Brennen von Dentalrestaurationsteilen in dem Dentalbrennofen. Die Bedienvorrichtung (10) ermöglicht insbesondere auch die Eingabe weiterer Parameter für einen Brennzyklus.

Ein Bedienelement (30, 32, 34),erlaubt die Ansteuerung eines Glanzbrand-Programmes des Dentalbrennofens, und zwar mit unterschiedlichen Werten sowohl für die Temperatur als auch für die Zeitdauer des Glanzbrandes, wobei das Bedienelement (30, 32, 34) die gleichzeitige Einstellung von Temperatur- und Zeitdauerparametern des Glanzbrandes ermöglicht.

## Beschreibung

Die Erfindung betrifft einen Dentalbrennofen, gemäß dem Oberbegriff von Anspruch 1, sowie ein Verfahren zum Betrieb eines Dentalbrennofens gemäß dem Oberbegriff von Anspruch 11.

Keramische Dentalmaterialien werden typischerweise nach genau vorgegebenen Brennkurven und mit genauen Brennparametern gebrannt. Die Einstellung dieser Brennparameter und der Brennkurven wird vorab vorgenommen.

Derartige Dentalbrennöfen sind längst bekannt, wozu beispielhaft auf die DE 4 119 483 C2 und die DE 19 825 866 C1 verwiesen wird. Die Brennzyklen sind teilweise recht unterschiedlich und unterscheiden sich von ihrer Art; so unterscheidet man den Oxidations-brand, den Washbrand, den Dentinbrand, den Schneidebrand und den Glasurbrand; bei allen müssen die Brennparameter je genau nach den Herstellerangaben für das entsprechende Material eingehalten werden. Hierdurch bedingt ergeben sich zahlreiche Programme, zumal auch bei höheren Massen der Dentalrestaurationsteile typischerweise eine längere Zykluszeit für den Brennzyklus veranschlagt werden muss, so dass also bei sehr großen Dentalrestaurationsteilen wie vielgliedrigen Brücken sowohl die Aufheizzeit als auch die Abkühlzeit verlängert ist.

Derartige Programme sind typischerweise in dem Dentalbrennofen fest einprogrammiert und lassen sich vom Benutzer in sehr beschränktem Umfang ändern. Durch die Vielzahl von Programmbelegungen wird die Bedienung des Dentalbrennofens gerade bei unterschiedlichen zu brennenden Materialien eher umständlich. Die Komplexität nimmt noch zu, wenn die Kombination der verschiedenen vorstehend genannten Brände fest vorgegeben wird.

Andererseits besteht die gängige Ansicht, dass aufeinander folgende Brände typischerweise einander auch beeinflussen, so dass feste Kombinationen an sich bevorzugt sind, um die Qualitätsanforderungen an Dentalrestaurationsteile zu erfüllen.

Gerade beim Glanzbrand oder Glasurbrand sind Abweichungen jedoch teilweise erwünscht, so dass typischerweise die Brennparameter für den Glanzbrand frei einstellbar sind und damit in das Belieben des betreffenden Zahntechnikers gestellt sind. Dies führt bei weniger erfahrenen Zahntechnikern jedoch leider zu unerwünschten Ergebnisen, was auch dazu führen kann, dass die gesamte, bereits mehrfach gebrannte Dentalrestauration verworfen werden muss.

Demgegenüber liegt der Erfindung die Aufgabe zu grunde, einen Dentalbrennofen gemäß dem Oberbegriff von Anspruch 1 zu schaffen, der ein verbessertes Ergebnis gerade auch für das endgültige Aussehen der Dentalrestauration ermöglicht und eine geringere Abhängigkeit von der Erfahrung des Zahntechnikers bietet.

Diese Aufgabe wird erfindungsgemäß durch Anspruch 1 gelöst. Vorteilhafte Weiterbildungen ergeben sich auch den Unteransprüchen.

Erfindungsgemäß ist ein Bedienelement vorgesehen, das im Grunde von der Einstellung der Programme im Einzelnen unabhängig ist. Damit sinkt die Komplexität der Bedienung, denn es muss nun nicht jede Möglichkeit der Ausgestaltung des Glanzbrandes mit den einzelnden Brennprogrammen im Übrigen kombiniert werden. Den Anforderungen an die Ästhetik kann so in einfacher Weise Rechnung getragen werden, ohne das Qualitätseinbußen zu befürchten wären, denn sowohl hinsichtlich der Transluzens als auch hinsichtlich der Festigkeit der Dentalrestauration liegt das Ergebnis bereits vor dem Glanzbrand fest.

Durch die erfindungsgemäß besonders günstige gleichzeitige Einstellung von Temperatur-und Zeitdauerparametern des Glanzbrandes ist die Einstellung überraschend ohne Qualitätseinbuße deutlich vereinfacht. Die Voreinstellung erlaubt die gleichzeitige und proportionale oder im wesentlichen proportionale Einstellung dieser beiden Parameter synchron miteinander, so dass es für den Zahntechniker beispielsweise möglich ist, ausgehend von einer Glanzbrand-Normaleinstellung nach seiner Wahl die Intensität des Glanzbrandes zu erhöhen oder abzusenken, je nachdem, ob er stärkere oder wenig stark reflektierende Oberflächen wünscht.

Nachdem der Glanzbrand typischerweise ohne zusätzliche Glasurmassen vorgenommen wird, erübrigt sich ein zusätzlicher Materialauftrag, und damit sind Probleme mit der Maßhaltigkeit ausgeschlossen.

Erfindungsgemäß ist es günstig, wenn der Dentalbrennofen von vornherein so ausgelegt ist, dass der Glanzbrand in Abhängigkeit von den vorhergehenden Bränden nur in einem Bereich angeboten wird, der keine Beschädigungen des Dentalrestaurationsteils ermöglicht. So kann eine erhöhte Bedienungssicherheit erzielt werden, die aber dennoch eine feinere Differenzierung des gewünschten Glasurbrands oder Glanzbrands im Bereich der für die jeweilige Dentalrestauration unkritischen Parameter ermöglicht.

Beispielsweise lässt sich bei einem vorab abgelaufenem Programm für eine zehngliedrige Brücke, die ein entsprechendes Volumen und Gewicht der Dentalrestauration bedingt, der zulässige Bereich für die Temperatur- und Zeitdauerparameterpaare des Glanzbrandes in höhere Bereiche verschieben. Dies ist dann vom Steuerungsprogramm des Dentalbrennofens her so vorgegeben, so dass der Zahntechniker innerhalb des von ihm gewünschten Glanzbereichs von vornherein eine standardisierte Vorgabe erhält.

Beispielsweise kann insofern der Mittelwert der Vorgabe mit "100%" beziffert werden, und die geringeren und höheren Werte entsprechender Weise in Prozent angegeben werden.

Erfindungsgemäß besonders günstig ist es auch, dass beim Einschalten des Glanzbrand-Modus die Programmparameter des Ofens im Übrigen, also beispielsweise für einen Dentinbrand oder einen Schneidebrand, ausgeblendet sind und nicht mehr geändert werden können. Dies lenkt die Aufmerksamkeit des Zahntechnikers zugleich auch auf die Notwendigkeit, den Glanzbrand einzustellen, etwa, wenn er von einer Standardeinstellung von 100% abweichen will.

Es ist auch möglich, die Anzahl der möglichen Einstellungen der Glanzbrand-Parameter-werte lediglich in wenigen Stufenzonen vorzunehmen, beispielsweise in den Stufen "niedrig", "mittel" und "hoch". In größeren Dentallabors kann es von Vorteil sein, wenn die grundsätzliche Einstellung der Bedienungsmöglichkeiten des Dentalbrennofens nur von Vorarbeitern oder Administratoren vorgenommen werden kann, der ausführende Zahntechniker hingegen nur über eine beschränkte Auswahlmöglichkeit in seinem Bedienermodus verfügt, und in diesem Zusammenhang ist es auch möglich, die Auswahlmöglichkeiten für den Glanzbrand in entsprechender Weise einzuschränken.

In vorteilhafter Ausgestaltung der Erfindung ist es vorgesehen, bestimmte Glanzbrand-Einstellungen den ausführenden Zahntechnikern zuzuordnen, und durch Markierungen zu kennzeichnen. Dies ermöglicht es, dass der betreffende Zahntechniker seine bevorzugte Glanzbrand-Einstellung auf Anhieb einstellen kann.

Es ist auch möglich, diese Glanzbrand-Einstellung benutzertypisch zuzuordnen.

Es ist auch möglich, die betreffende Glanzbrand-Einstellung mit einer Benutzerverwaltung zu koppeln und dann, wenn der betreffende Benutzer sich an dem Dentalbrennofen eingeloggt hat, die betreffende Glanzbrand-Einstellung vorzuwählen oder als Vorwahl anzubieten, um dem Benutzer dennoch im Einzelfall Abänderungen zu ermöglichen.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Ansicht einer Anzeigevorrichtung in Kombination mit einer Bedienvorrichtung eines erfindungsgemäßen Dentalbrennofens in einer Ausführungsform; in dem Standard-Modus; und
- Fig. 2: die kombinierte Anzeige- und Bedienvorrichtung gemäß Fig. 1, jedoch in dem Glanzbrand-Modus.

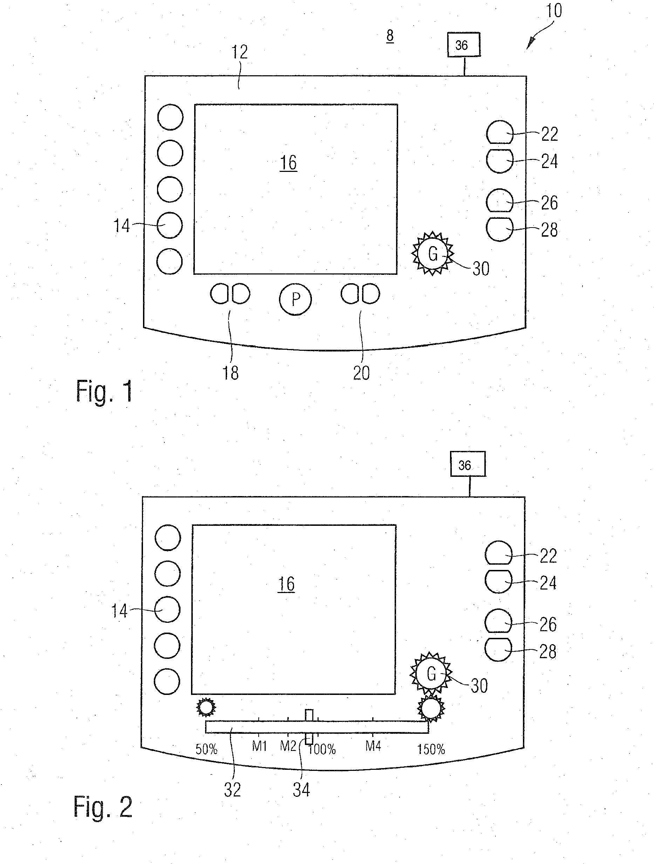

In Fig.1 ist eine kombinierte Anzeige- und Bedienvorrichtung 10 eines erfindungsgemäßen Dentalbrennofens dargestellt. Der Digitalbrennofen weist eine nicht dargestellte Steuervorrichtung auf, die ansprechend auf die Eingabe von Programmparametern über eine Taste P der Anzeige- und Bedienvorrichtung 10 die Steuerung von Brennzyklen für Dentalrestaurationsteile ermöglicht, die sich in dem Dentalbrennofen befinden.

Die Anzeige- und Brennvorrichtung weist einen berührungsempfindlichen Bildschirm 12 auf, der Felder wie die Tasten 14 aufweist, deren Berühren je eine Funktion auslöst. In an sich bekannter Weise sind die Tasten 14 und die übrigen Bedienelemente lediglich symbolisch hinterlegt und durch Berührung wird die je erwünschte Funktion ausgeführt.

Darüber hinaus weist der Bildschirm 12 ein Anzeigefeld 16 auf, auf welchem je nach ablaufendem Programm die durchlaufene Brennkurve die je bestehende Temperatur an den je vorhandenen Messstellen des Dentalbrennofens, oder aber auch die Fest- Brennzeit dargestellt ist. Die Programmfunktion P ist über Hilfstasten 18 und 20 bedienbar, wobei einzelnde Programme angewählt, aber auch innerhalb der Programme Änderungen von Parametern vorgenommen werden können.

Über Tasten 22 und 24 lässt sich die Ofenhaube des Dentalbrennofens öffnen und schließen, um so eine freie Zugängigkeit zu dem Dentalrestaurationsteil zu ermöglichen bzw. den Ofen zu schließen und damit den Brennzyklus einzuleiten.

Ferner sind Tasten 26 und 28 vorgesehen, die mit Stop und Start beziffert sind und beispielsweise den Start oder den Stopp eines Brennzyklus zu ermöglichen.

Erfindungsgemäß ist darüber hinaus eine Taste 30 vorgesehen, die einer Glanzbrandfunktion zugeordnet ist. Mit dem Auslösen dieser Taste wird die Anzeige- und Bedienvorrichtung 10 hinsichtlich des Darstellungsinhalts geändert, so dass sich das gemäß aus Fig. 2 ersichtliche Bild ergibt. Das Anzeigefeld 16 zeigt dann beispielsweise die aktuell bestehende Temperatur im Dentalbrennofen an. Die Taste P und die zugehörigen Hilfstasten 18 und 20 sind ausgeblendet und an Stelle dessen ist ein Schieberegler 32 eingeblendet, der dem Glanzbrand-Modus zugeordnet ist und die Intensität des Glanzbrandes einzustellen erlaubt.

Hierzu weist der Schieberegler 32 einen Regler 34 auf, der bei einer Berührung mit dem Finger sich entlang des Schiebereglers 32 bewegt, um so den erwünschten Glanzbrand in seiner Intensität einzustellen. Die Taste 30, der Schieberegler 32 und der Regler 34 bilden zusammen ein Bedienelement für den Glasurbrand.

Der Schieberegler 32 ist in dem dargestellten Ausführungsbeispiel mit Markierungen versehen, die den möglichen Stellbereich symbolisieren sollen. Die ünkeste Markierung beträgt beispielsweise 50% und die rechteste Markierung beispielsweise 150%, wobei es sich versteht, dass an Stelle dessen auch beliebige andere Werte, beispielsweise im Bereich zwischen 30% und 300%, realisierbar sind.

Nach Einstellen des gewünschten Glanzbrand-Wertes über den Regler 34 wird die Taste 30 erneut angetippt und der Glanzbrand damit gestartet. In diesem Zustand wird der Glanzbrand ausgeführt, und der Schieberegler ist abgedunkelt dargestellt, um deutlich zu machen, dass beim einmal eingeleitetem Glanzbrand keine Änderung der eingestellten Parametern mehr möglich ist.

An Stelle des erneuten Antippens der Taste 30 kann auch die Starttaste 28 betätigt werden und die betreffende Funktion ausgelöst werden.

Die Markierungen M1, M2 und M4 entsprechend der bevorzugten Stellungen des Reglers 32 für die Benutzer M1, M2 und M4.

Nach Abschluss des Glanzbrandes wird dies auf dem Anzeigefeld 16 deutlich gemacht, und der Zahntechniker kann - gegebenenfalls nach Ablauf einer Haltezeit oder Uhrzeit - das oder die fertigen Dentalrestaurationsteile nach Öffnen des Ofens über die Taste 22 entnehmen.

Wenn der Dentalbrennofen zwischen dem Ablauf eines Brennprogramms über die Taste P und der Auslösung der Glanzbrand-Funktion über die Taste 30 nicht geöffnet wird, geht die Steuervorrichtung des Dentalbrennofens davon aus, dass es sich um das gleiche Dentalrestaurationsteil handelt. Dessen einmal ermittelte und fest liegende Masse und Art kann insofern in die Transluzens des Glanzbrand-Modus eingebracht werden, so dass eine Voreinstellung entsprechend dem nunmehr dem Glanzbrand zu unterwerfendem Dentalrestaurationsteil realisierbar ist.

Wenn hingegen der Glanzbrand ausgelöst wird, wenn nachdem der Dentalbrennofen offen war, wird er von einer Standardeinstellung den Glanzbrand ausgegangen, die selbstverständlich über den Schieberegler 32 änderbar ist.

Eine Steuervorrichtung 40 ist schematisch in Fig. 1 eingetragen.

## Patentansprüche

1. Dentalbrennofen, mit einer Anzeigevorrichtung und einer Bedienvorrichtung (10) für den Dentalbrennofen, wobei die Bedienvorrichtung insbesondere in die Anzeigevorrichtung unter Ausbildung eines berührungsempfindlichen Bildschirms (12) integriert ist, und wobei die Bedienvorrichtung (10) die Auswahl von Programmen für das Brennen von Dentalrestaurationsteilen in dem Dentalbrennofen ermöglicht, und wobei die Bedienvorrichtung (10) insbesondere auch die Eingabe weiterer Parameter für einen Brennzyklus erlaubt, **dadurch gekennzeichnet,**
**dass** ein Bedienelement (30, 32, 34), insbesondere ein Bedienfeld, die Ansteuerung eines Glanzbrand-Programmes des Dentalbrennofens ermöglicht, und zwar mit unterschiedlichen Werten sowohl für die Temperatur als auch für die Zeitdauer des Glanzbrandes, wobei das Bedienelement (30, 32, 34) die gleichzeitige Einstellung von Temperatur- und Zeitdauerparametern des Glanzbrandes bewirkt.

2. Dentalbrennofen nach Anspruch 1, **dadurch gekennzeichnet, dass** das Bedienelement (30, 32, 34) an eine Steuervorrichtung für das Glanzbrand-Programm angeschlossen ist und dass die Steuervorrichtung die Temperatur und die Zeitdauer des Glanzbrandes einstellt und bei Erhöhung der Temperatur auch die Zeitdauer erhöht.

3. Dentalbrennofen nach Anspruch 1 oder 2, **dadurch gekennzeichnet, dass** eine Steuervorrichtung des Dentalofens die Auslösung eines Glanzbrand-Programmes mit einer Vielzahl von Werten für Temperatur und Dauer des Glanzbrandes erlaubt, wobei sowohl die Temperatur als auch die Zeitdauer des Glanzbrandes bei höheren Werten erhöht und bei niedrigeren Werten erniedrigt sind.

4. Dentalbrennofen nach einem der vorhergehenden Ansprüche, **dadurch gekennzeichnet, dass** eine Steuervorrichtung für den Dentalbrennofen, die auf das Bedienelement (30, 32, 34) für die Ansteuerung des Glanzbrand-Programmes anspricht, einen Voreinstellungsmodus hat, in welchem für einen vorgegebenen Glanzbrand-Wert eine Temperatur und eine Zeitdauer voreingestellt ist, und dass die Temperatur und die Zeitdauer bei zunehmendem Glanzbrand-Werten monoton steigend zunehmen.

5. Dentalbrennofen nach einem der vorhergehenden Ansprüche, **dadurch gekennzeichnet, dass** das Bedienfeld eine Schiebereglerfunktion (32) aufweist, über welche die Intensität des Glanzbrandes einstellbar ist, und dass pro Bediener ein vorgegebener Glanzbrand-Wert (M1, M2, M4) des Schiebereglers (32) einstellbar ist.

6. Dentalbrennofen nach einem der vorhergehenden Ansprüche, **dadurch gekennzeichnet, dass** die Anzeigevorrichtung in die Bedienvorrichtung (10) des Dentalbrennofens nach der Art eines berührungsempfindlichen Bildschirms (12) integriert sind und eine Tastfunktion (30) aufweisen, die ein Glanzbrand-Programm aktiviert, welches seinerseits einen Glanzbrand-Regler (32), auf der Anzeigevorrichtung einblendet, der einstellbar ist.

7. Dentalbrennofen nach Anspruch 6, **dadurch gekennzeichnet, dass** das Bedienfeld (30, 32, 34) des Glanzbrand-Programmes mindestens 2, insbesondere mindestens 3 Werte für die Einstellung des Glanzbrand-Programmes anbietet, die je vorgegebene und zugeordnete Einstellung für die Temperatur und Zeitdauer des Glanzbrandes haben.

8. Dentalbrennofen nach einem der vorgehenden Ansprüche, **dadurch gekennzeichnet, dass** die Temperatur/Zeit-Wertepaare für den Glanzbrand voreingestellt sind und dem Benuzter eine Mehrzahl von Wertepaaren, insbesondere 3 bis 10 Wertepaare, für die Einstellung des Glanzbrandes angeboten werden.

9. Dentalbrennofen nach einem der vorhergehenden Ansprüche, **dadurch gekennzeichnet, dass** durch Auslösen des Bedienfeldes für die Ansteuerung eines Glanzbrand-Programmes die Anzeige der Anzeigevorrichtung (10) so geändert wird, dass die Parameterwerte des Glanzbrandes einstellbar sind.

10. Dentalbrennofen nach Anspruch 9, **dadurch gekennzeichnet, dass** in dem Glanzbrand-Modus die Auswahl von Programmen für das Brennen von Dentalrestaurationsteilen im Übrigen gesperrt ist.

11. Verfahren zum Betrieb eines Dentalbrennofens, bei welchem auf einer Anzeigevorrichtung (10) die Temperatur und/oder das gewählte Programm für den Betrieb für das Brennen von Dentalrestaurationsteilen eingerichtet ist, und wobei mit einer Bedienvorrichtung (10) das Programm und/oder weitere Parameter des Dentalbrennofens eingestellt werden, **dadurch gekennzeichnet, dass** nach dem Brennvorgang der Dentalrestaurationsteile über ein Bedienelement (30, 32, 34) ein Glanzbrand-Programm des Dentalbrennofens angewählt wird, und dass zusätzlich ein Wert aus einem vorgegebenen Wertepaar mit der Temperatur und der Zeitdauer des Glanzbrandes angewählt wird, über welche sowohl die Temperatur- als auch die Zeitdauer-Parameter des Glanzbrandes gleichzeitig eingestellt werden. '
